Europäisches Patentamt

European Patent Office

Office européen des brevets

(11) Publication number: 0 591 931 A1

# EUROPEAN PATENT APPLICATION

(21) Application number: 93116093.1

(22) Date of filing: 05.10.93

(51) Int. Cl.5: H04N 1/46, G06F 15/68

(30) Priority: 06.10.92 US 956732

(43) Date of publication of application:
13.04.94 Bulletin 94/15

(84) Designated Contracting States:
DE FR GB

(71) Applicant: EASTMAN KODAK COMPANY
343 State Street
Rochester, New York 14650-2201(US)

(72) Inventor: Phipps, Robert Maurice, c/o
Eastman Kodak Comp.
Patent Legal Staff,
343 State Street
Rochester, New York 14650-2201(US)
Inventor: Testa, Robert Francis, c/o Eastman
Kodak Comp.
Patent Legal Staff,

343 State Street
Rochester, New York 14650-2201(US)
Inventor: Ring, Stuart Frederick, c/o Eastman
Kodak Comp.
Patent Legal Staff,
343 State Street
Rochester, New York 14650-2201(US)
Inventor: Setchell, John S., Jr., c/o Eastman
Kodak Comp.
Patent Legal Staff,
343 State Street
Rochester, New York 14650-2201(US)

(74) Representative: Wagner, Karl H. et al
WAGNER & GEYER
Patentanwälte
Gewürzmühlstrasse 5
D-80538 München (DE)

(54) Method and apparatus for encoding and performing color multivariable transforms.

(57) A system in which single variable terms of a function are implemented using simple one dimensional table look-ups. Multivariable terms are implemented using addition and shift operations on the variables followed by one dimensional table look-ups where the secondary outputs of the multivariable cross term function are compensated by the single variable term look-up operations. Combinations of the outputs of the single variable functions and multivariable functions are obtained by simple addition operations. To encode the transform into the tables a compensated transform equation is created and divided into single variable and multivariable segments and one dimensional tables are created for each segment.

$$r^1 = C_0 + C_1 r + C_2 r^2 + C_3 r^3$$

$$g^1 = C_4 g + C_5 g^2 + C_6 g^3$$

$$b^1 = C_7 b + C_8 b^2 + C_9 b^3$$

FIG. 2

## BACKGROUND OF THE INVENTION

### Field of the Invention

The present invention is directed to implementing complex multivariable transforms with simple, high speed elements or operations and, more particularly, to encoding and performing multivariable color transforms which have terms that involve two or more color inputs called cross terms where the mathematical operations are implemented using simple look-up operations in one dimensional tables, addition, subtraction and shift operations.

### Description of the Related Art

Digital color manipulation has been attempted ever since computers started to use color images and graphics. In computing systems and color capture and reproduction devices color information is frequently converted from one form to another for purposes of calculation or to provide output signals to drive a device. Color data is also operated on by color transforms to modify the color data to achieve some special effect, such as color balance correction or tone scale enhancement. The transforms typically are derived from measurements, mathematical models of physical phenomena or definitions. The transforms are typically in the form of analytical functions or equations. In real time computing systems, and color capture and output devices using digital computers as controllers or for signal processing these color transforms can be processed as equations where each time a new transform is required a complex multivariable equation is executed. These color transforms can also be converted into digital representations which allow the color data to be speedily processed. The major technique for performing the high speed transforms is to use tri-linear or three dimensional look-up tables. U.S. Patents 4,500,919 to Schreiber, 4,346,402 to Pugsley, 4,893,181 to Yeomans and 4,837,722 to Sara are typical of the prior art. It is desired today that these complex color transformation operations be performed rapidly in small computer systems, such as desk top or personal computer systems. In this context, where speed and low memory usage is desired, computing the transform each time using a formula is too slow, however, very little memory is used. While the use of three dimensional tables is fast, the tables occupy too much memory space. What is needed is a system that provides the speed of the three dimensional table look-up method and the low memory requirements of the formula calculation method.

## SUMMARY OF THE INVENTION

It is an object of the present invention to provide a system that performs complex multivariable transforms at high speed with low memory space requirements.

It is another object of the present invention to provide a system that substitutes one dimensional look-up table operations, simple addition, subtraction and shift operations for multivariable equation calculations or three dimensional table look-ups.

It is also an object of the present invention to provide a high speed low memory space requirement color transform device.

It is a further object of the invention to cascade simple operations to perform complex calculations.

The above objects can be attained by a system in which single variable terms of a function are implemented using simple one dimensional table look-ups. Multivariable terms are implemented using simple additions and shifts of the variables followed by one dimensional table look-ups, where the secondary outputs of the multivariable function are compensated by the single variable term look-up operations. Combination of the outputs of the single variable tables and multivariable tables are obtained by simple additions to produce the transformed output.

These together with other objects and advantages which will be subsequently apparent, reside in the details of construction and operation as more fully hereinafter described and claimed, reference being had to the accompanying drawings forming a part hereof, wherein like numerals refer to like parts throughout.

## BRIEF DESCRIPTION OF THE DRAWINGS

Figure 1 illustrates the system components used in the present invention;
Figure 2 illustrates implementation of a component of a transform;
Figure 3 depicts implementation of a complete color transform;
Figure 4 illustrates a portion of an improved transform implementation;

Figure 5 is a flowchart illustrating one way Figure 3 can be implemented on a serial machine;

Figure 6 depicts implementation of a simple cross term;

Figure 7 depicts implementation of a complete transform with simple cross terms for each color; and

Figure 8 illustrates implementation of a more complex cross term.

DESCRIPTION OF THE PREFERRED EMBODIMENTS

The elemental forms used to represent a mathematical function in the present invention comprise one-dimensional look-up tables (1D LUT), shift elements or operations and summation elements or operations. The 1D LUTs are used to represent arbitrary, single variable or multivariable functions of the input variables. The summation operation is used to form sums of outputs from an arbitrary number of 1D LUTs or to form an index into a LUT from multiple input variables. Shift or divide elements can also used to form the multiple variable index or input to a multivariable LUT. By cascading or forming tree structures of 1D LUTs, shift operations and summation operations, including summing negative terms or subtraction, it is possible to synthesize complex mathematical functions including terms which are a function of several of the input variables and which includes division and/or the multiplication operations as well as summation.

As noted above, very complex functions can be represented by cascading combinations of 1D LUTs, shift elements and summation elements, and the precision of the output can be adjusted by the quantization used in the 1D LUTs. Connected sequences of transforms, such as $r + r^2 + ...r^n$, can be reduced to simpler tree structures by combining 1D LUTs as long as the 1D LUTs are quantized the same way.

The approach described here is a much more compact form of transform representation than traditional tri-linear tables and is faster than either the tri-linear or direct algorithmic solutions.

The present invention particularly provides a method and apparatus for transforming a set of colors so that the colors can be represented in a particular color space, "corrected" for a particular device, or have an "effect" performed upon them. This invention allows for a very simple processing chain that performs these complex transformations. This chain includes one dimensional look-up tables (1D LUTs) and simple arithmetic operators or operations (usually adds). This allows for handling complex transformations with integer math instead of floating point math. The invention can include a set of input 1D LUTs, one for each input channel that perform input shaping. The output of these input LUTs is then fed to a set of tables for each output channel. This comprises one 1D LUT for each input channel and as many cross term 1D LUTs as necessary for the particular transform. The results of all of these 1D LUTs are added together, clipped to the size of the output LUTs, and then fed to the output ID LUTs, one for each output channel. The output LUTs can provide further output shaping. Although the present invention when used in color transforms has three input and three output channels, the invention is not limited to that number and can be applied to two or more channels.

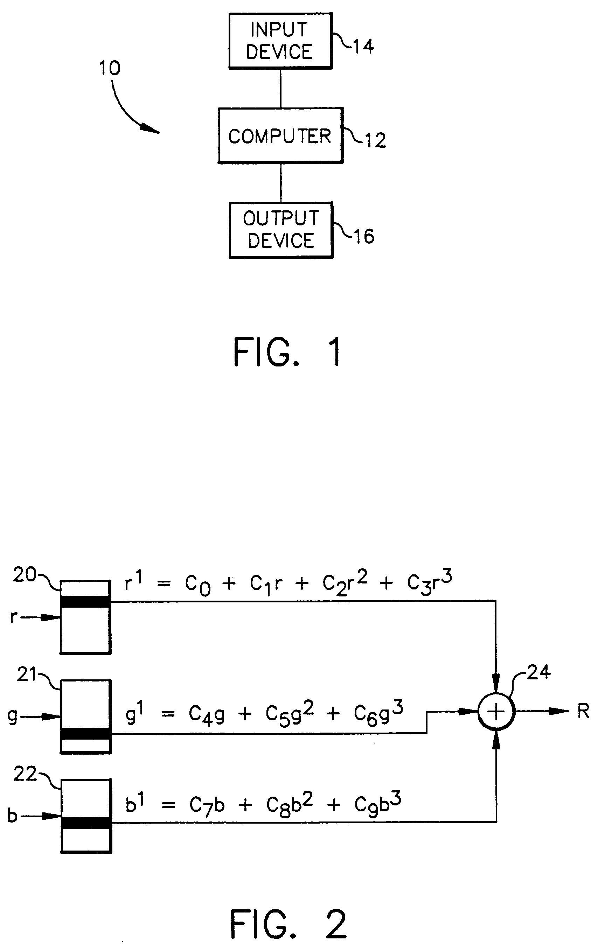

The present invention is typically implemented in a system 10, as illustrated in Fig. 1, which includes a computer 12 such as one of the computers from the Apple MacIntosh II family. The computer 12 typically transforms a color image from an input device 14, such as a Microtek 600ZS scanner, into color variables for a particular output device, such as the color monitor provided with the MacIntosh system designated Apple Color MO401, so that the image captured by the input device 14 is accurately represented on the display of the output device 16. Other input devices could be video cameras and photo CDs while other output devices could be printers or specialized monitors.

A typical set of equations or multivariable functions or transforms that could be used in the transform between the input device 14 and the output device 16 are:

$$R = C_o + C_1 r + C_2 r^2 + C_3 r^3 + C_4 g + C_5 g^2 + C_6 g^3 + C_7 b + C_8 b^2 + C_9 b^3 \qquad (1)$$

$$G = C_{10} + C_{11} r + C_{12} r^2 + C_{13} r^3 + C_{14} g + C_{15} g^2 + C_{16} g^3 + C_{17} b + C_{18} b^2 + C_{19} b^3 \qquad (2)$$

$$B = C_{20} + C_{21} r + C_{22} r^2 + C_{23} r^3 + C_{24} g + C_{25} g^2 + C_{26} g^3 + C_{27} b + C_{28} b^2 + C_{29} b^3 \qquad (3)$$

where R, G and B are the red, green and blue color the outputs provided by computer 12 to the output device 16, r, g and b are the color inputs to the computer 12 from the input device 14 and $C_0$ - $C_{29}$ are transformation constants which essentially map the colors produced by the input device 14 to the same or closest colors possible by the output device 16. It is possible to implement the nine variable terms of each equation with nine 1D LUTs with adds to thereby implement a 3x3 matrix combination resulting in 18 LUT's for the three equations. However, we have realized that the nine 1D LUTs do not have to be limited to implementing a 3x3 matrix, that in fact, much more complicated mathematical expressions can be encapsulated in that form and that with the input and output shapers a generalized tool for color manipulation can be produced. In the present invention for color transforms we fill the nine 1D LUTs with the output of the multivariable segments of equations (1) - (3). In this way the three equations can be performed by 9 LUTs saving considerable memory space and execution time. Of course, many other mathematical forms can be used to fill the 1D tables such as polynomials, bessel functions, cubic splines, besier curves and others, including filling them with measured data.

The present invention, as mentioned above, implements portions or segments of equations 1-3, the single variable segments, using 1D LUTs. For example the segment:

$$C_0 + C_1 r + C_2 r^2 + C_3 r^3 \qquad (4)$$

is implemented as a single look-up table, such that for each value of r, when r is used as the index, the output of the table is the precomputed result of equation (4). The creation of the contents or entries of the table for equation (4) is easily accomplished by a person of ordinary skill in the art executing equation (4) for each possible value of r and storing the result at location r in the table. For example, at table location nine or $T(9)$ would be stored $C_0 + C_1{*}9 + C_2{*}9^2 + C_3{*}9^3$. The combining of the different parts or segments of equation (1) into a single output is performed by an addition operation or element as shown in Figure 2 where the outputs of tables 20, 21 and 22 for equation 3 are shown and the final result is produced by the addition or summation element or operation 24.

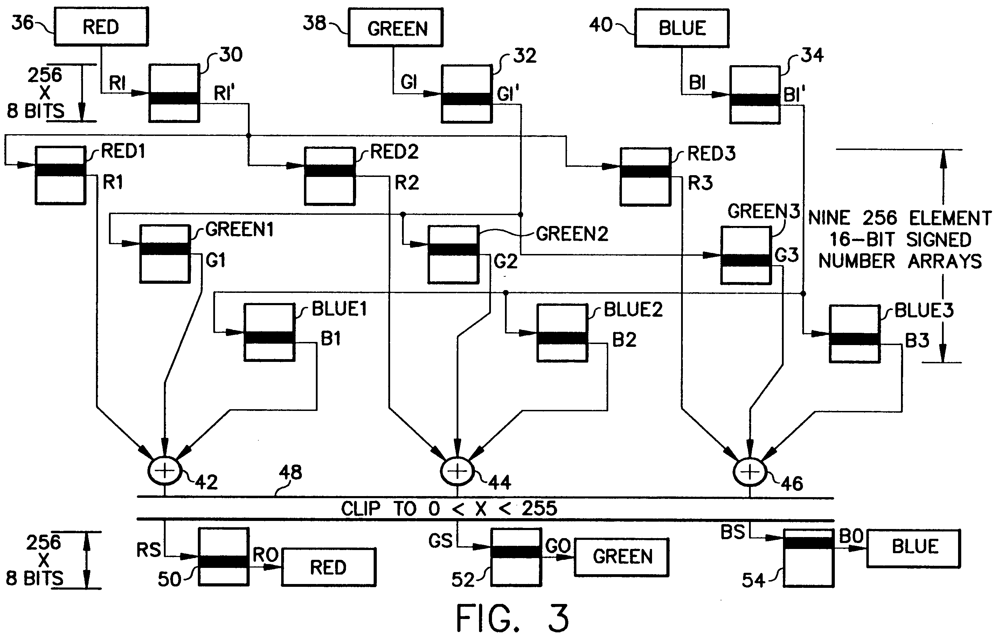

All the outputs associated with the transforms of equations (1) - (3) can be produced using one dimensional table look-ups and additions as illustrated in Figure 3. The first three tables 30, 32 and 34, are the input shapers. The results of the shapers are fed into or used to access the 9 1D LUTs in the middle. These 9 1D LUTs implement function segments as follows:

Red1 implements $C_0 + C_1 r + C_2 r^2 + C_3 r^3$
Green1 implements $C_4 g + C_5 g^2 + C_6 g^3$
Blue1 implements $C_7 b + C_8 b^2 + C_9 b^3$
Red2 implements $C_{10} + C_{11} r + C_{12} r^2 + C_{13} r^3$
Green2 implements $C_{14} g + C_{15} g^2 + C_{16} g^3$
Blue2 implements $C_{17} b + C_{18} b^2 + C_{19} b^3$
Red3 implements $C_{20} + C_{21} r + C_{22} r^2 + C_{23} r^3$
Green3 implements $C_{24} g + C_{25} g^2 + C_{26} g^3$
Blue3 implements $C_{27} b + C_{28} b^2 + C_{29} b^3$

The summation elements 42, 44 and 46 combine the outputs of the tables and therefore the segments of the equations. A clipping function 48, which keeps the outputs in a desired bit range, can be provided prior to the output shapers 50, 52 and 54 which are also 1D LUTs.

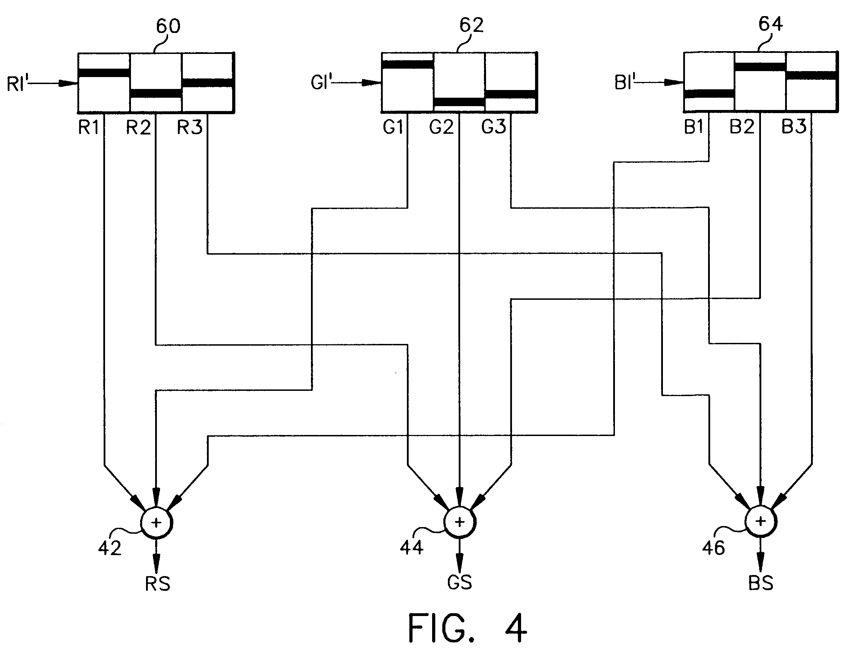

A timewise more efficient implementation of equations (1) - (3) is illustrated in Figure 4. In this implementation the tables 60, 61 and 62 are a combination of the corresponding tables Red1 - Blue3, such that only a single index is used to access a table holding all the intermediate values associated with each input variable. For example, the index RI' is used to simultaneously obtain the intermediate values R1, R2 and R3 from table 60. As a result, only a single access or cycle is required to obtain all the intermediate values associated with a single input variable rather than the three accesses that would be required in Figure 3. The tables 60, 61 and 62 are of course three times as wide as the tables of Figure 3.

The operations of Figures 3 and 4 can be implemented using hardwired devices such as ROMs or RAMs and adder circuits. For more generalized operations, the operations of Figures 3 and 4 can be performed by a parallel computer with multiple processors such that a first processor accesses table 60 while two other processors access tables 61 and 62, the first processor could then perform the addition operation 42 while the two other processors perform the additions 44 and 46. Of course, three different processors could perform the additions 42, 44 and 46 implementing Figures 3 and 4 as pipelines. However, the preferred implementation uses a low cost single computer.

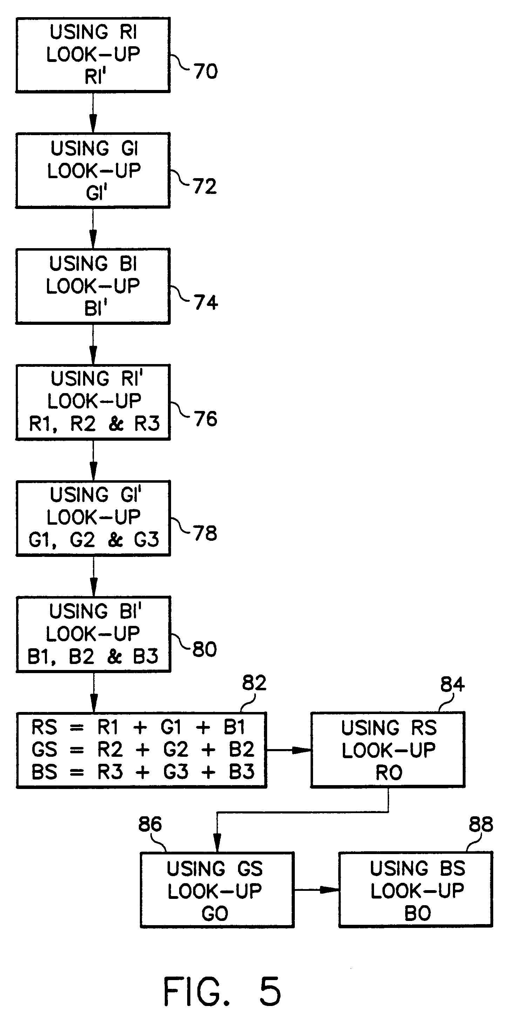

One way of performing the operations of Figure 4 in a single computer is illustrated in Figure 5. The operation starts with the look-up step 70 for the red input RI, however, starting with the red input look-up is arbitrary and the start could just as well be with the green look-up 72 or the blue look-up 74. These steps 70, 72 and 74 perform the operations of tables 30, 32 and 34 of Figure 3. Next the look-up steps 76, 78 and 80 are performed to obtain the intermediate values for each variable in a single access. This corresponds to the tables Red1 - Blue3 of Figure 3 or tables 60, 62 and 64 of Figure 4. Each of these steps 76, 78 and 80 can be accomplished with a vector read operation in the preferred C language. The addition step 82 performs the addition operations 42, 44 and 46 of Figures 3 and 4 while the look-ups 84, 86 and 88 correspond to 50, 52 and 54 of Figure 3.

A more complex and more accurate color transformation is represented by equation (5).

$$R = C_0 + C_1 r + C_2 r^2 + C_3 r^3 + C_4 g + C_5 g^2 + C_6 g^3 + C_7 b + C_8 b^2 + C_9 b^3 + C_{10} rg \qquad (5)$$

where the rg is a cross term that provides additional compensation to the red output. To implement this equation we have realized that rg is a component of:

$$K_0 (r + g)^2 = K_0 r^2 + 2K_0 rg + K_0 g^2 \qquad (6)$$

By dividing both sides of equation (6) by 2 we have:

$$K_0 (r + g)^2 / 2 = K_0 r^2 / 2 + K_0 rg + K_0 g^2 / 2 \qquad (7).$$

Equations (7) and (1) can be combined to produce equation (5) such that:

$$R = C_0 + C_1 r + C_2 r^2 - K_0 r^2 / 2 + C_3 r^3 + C_4 g + C_5 g^2 - K_0 g^2 / 2 + C_6 g^3 + C_7 b + C_8 b^2 + C_9 b^3 + K_0 rg + K_0 r^2 / 2 + K_0 g^2 / 2 \qquad (8)$$

where $K_0 = C_{10}$ of equation (5).

The single variable segments of equation (8) not associated directly with the cross term are implemented as 1D LUTs as previously explained with respect to equations (1)-(3). For example intermediate value $C_0 + C_1 r + C_2 r^2 + C_3 r^3 - K_0 r^2 / 2$ is produced by a single table.

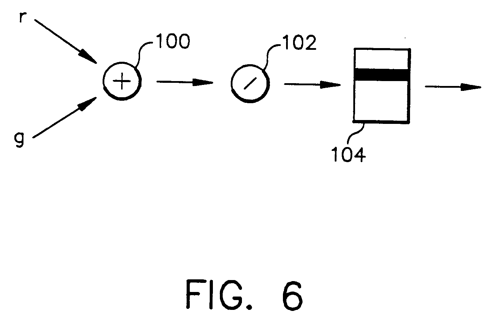

A single look-up table is used to implement the cross term rg, as illustrated in Figure 6. The r and g inputs are added together by adder 100 and then divided by two by a shifter 102 (a simple shift although this isn't really necessary since table 104 could be 511 entries long instead of 256). Table 104 implements a square function and multiplies the result by $^1/_2 K_0$ resulting in $^1/_2 K_0 (r + g)^2$ which is $^1/_2 K_0 r^2 + K_0 rg + ^1/_2 K_0 g^2$ the extra $^1/_2 K_0 r^2 + ^1/_2 K_0 g^2$ secondary terms are removed or compensated by the single variable term tables. In this example - $^1/_2 K_0 r^2$ is added to the function used to produce the entries of the single variable red table and - $^1/_2 K_0 g^2$ is added the function used to produce the entries for the single variable green table.

As can be seen from the above description when a cross term is included in the transform the steps of creating the tables contents includes a compensation operation. In creating the tables for a transform with cross terms the first step is to identify a mathematical equation with the same number of variables as in the cross term and the desired cross term. This equation will probably include secondary single variable terms that do not appear in the transform. The equation is then combined with the transform, absent the cross terms, to produce a transform that needs to be corrected or compensated but has the desired cross terms. The uncorrected transform is now compensated by subtracting out the secondary single variable terms thereby removing the effect of the secondary unwanted terms. The tables are then created by using the single variable terms and the single variable compensation terms to create the single variable table contents and the combined cross term variables to create the cross term table contents. To obtain the complete transform the outputs of the tables just need to be summed.

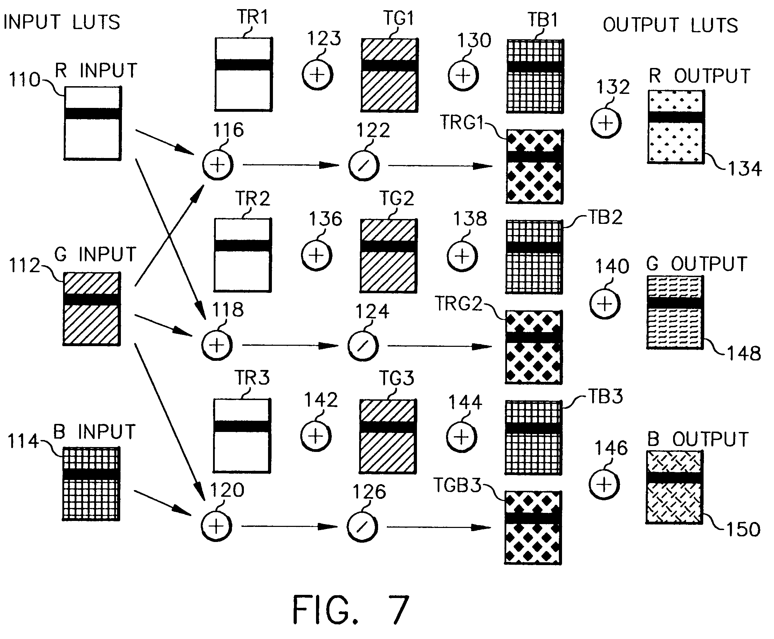

Figure 7 is an example of a full transform with the simple cross terms rg, gr and gb. The multivariable implemented in tables TR1, TB1, TG1, and TRG1 in Figure 7 is equation (5) while tables TR2, TB2, TG2 and TRG2 implement a corresponding equation for the G input and tables TR3, TG3 and TGB3 implement a corresponding equation for the B input. In Figure 7 the output of table 110 is applied to tables TR1, TR2 and TR3, the output of table 112 is applied to tables TG1, TG2 and TG3 and the output of table 114 is applied to tables TB1, TB2 and TB3. The output of table 110 is also applied to adders (or adder operations) 116 and 118, while the output of table 112 is also applied to adders 116 and 118 and the output of table 114 is applied to adders 118 and 120. The adder outputs are divided (shifted) by shift elements or operations 122, 124 and 126 and applied to tables TRG1, TRG2 and TBG3. The outputs of tables TR1, TG1 and TB1 are added to the output of TRG1 by adders or adder operations 128, 130 and 132 and applied to table 134, while corresponding operations are performed by adders 136, 138, 140, 142, 144 and 146 along with tables 148 and 150.

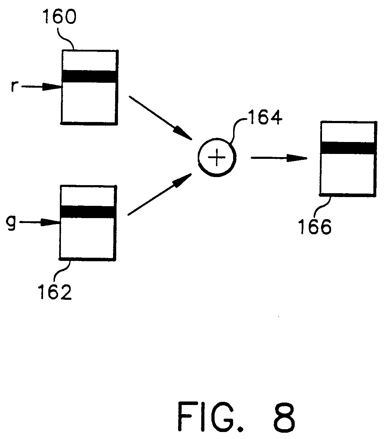

More complex cross terms than rg can be implemented in a similar manner as illustrated in Figure 8. Table 160 could implement a square function resulting in $r^2$, table 162 could implement a square function resulting in $g^2$, adder operation 164 could combine the terms, and table 164 could implement a square function and multiply that by $^1/_2 K_0$ resulting in $^1/_2 K_0 (r^2 + g^2)^2$ which is $^1/_2 K_0 r^4 + K_0 r^2 g^2 + ^1/_2 K_0 g^4$ the extra $^1/_2 K_0 r^4 + ^1/_2 K_0 g^4$ are taken off or compensated for in the tables that implement the single variable terms in a manner as previously described.

As shown above, cross terms of all sorts can be added to the basic form to provide more power and flexibility at the tradeoff of increased size and processing time. A process can be built by a person of ordinary skill in the art that recognizes the form variant that it is required, so that the extra overhead is only incurred when it is necessary for the more elaborate or precise color transformation. Also while the tables are generally 8 bits by 256 entries, their size can be changed in either direction (more bits or more entries) to add more accuracy to the transform.

As mentioned previously to fill the tables with the correct values from a set of multivariable equations becomes trivial as each of the tables is a function of a single input variable (for cross terms substitute the single input variable j for r + g, for example), therefore filling a particular table is done by simply solving the multivariable for the 256 (generally, the size of the table can of course be anything) possible inputs.

Implementation of the invention to transform color image data between a color image display(device space) and a color image data metric(reference color space) involves generally three stages:

1) Each data channel is passed through a single look-up table. This allows each individual channel to be modified by a function of that channel, such as a shaper. The function may be the display counts vs luminance relationship, its inverse relationship, or a linear to logarithmic conversion, etc. The equations summarizing this stage are as follows:

$$ch1\_out1 = f1(ch1\_input) \quad (9)$$

$$ch2\_out1 = f2(ch2\_input) \quad (10)$$

$$ch3\_out1 = f3(ch3\_input) \quad (11)$$

where f1 - f3 are one dimensional look-up tables.

2) The output data from stage 1 is then passed through a 3 x 3 matrix (or its equivalent: 3 1'st order multivariable equations in 3 variables). This allows each individual channel to be modified by a function of all three channels:

$$ch\ 1\ output = f(ch1,ch2,ch3) \quad (12)$$

The function may be the display phosphor tristimulus matrix, its inverse, a visual adaptation matrix, a rotation of primaries from one system to another or a combination of these affects. This stage is implemented using the techniques described previously with 9 LUTs and 6 adds.

The equations are as follows:

$$ch1\_out2 = s1(ch1\_out1) + s2(ch2\_out1) + s3(ch3\_out1) \quad (13)$$

$$ch2\_out2 = s4(ch1\_out1) + s5(ch2\_out1) + s6(ch3\_out1) \quad (14)$$

$$ch3\_out2 = s7(ch1\_out1) + s8(ch2\_out1) + s9(ch3\_out1), \quad (15)$$

where s1-s9 are 1 dimensional look-up tables.

3) Each data channel is passed through a single look-up table just as in stage 1. The equations summarizing this stage are as follows:

$$ch1\_out1 = t1(ch1\_out1) \quad (16)$$

$$ch2\_out1 = t2(ch2\_out2), \quad (17)$$

$$ch3\_out1 = t3(ch3\_out3), \quad (18)$$

where t1 - t3 are 1 dimensional look-up tables.

The following source code in the C language will implement the cross term transform of equation (5) and the corresponding equations for the green and blue inputs.

6

```
        {
        out_red    = lut_ptr->in_shapers[0][(int)
          *source_rgb_ptr++];
        out_green = lut_ptr->in_shapers[1][(int)
          *source_rgb_ptr++];
        out_blue   = lut_ptr->in_shapers[2][(int)
          *source_rgb_ptr++];

        if (parameter_ptr->have_cross term)
              {
            cross term[CHANNEL_1 + CHANNEL_2] =
              (out_red + out_green) >>1;


          cross term[CHANNEL_1 + CHANNEL_3] =
            (out_red + out_blue) >> 1;
          cross term[CHANNEL_2 + CHANNEL_3] =
            (out_green + out_blue)>>1;
            }
    red_ptr    = &(lut_ptr->ccm[0][out_red].color[0]);
    green_ptr = &(lut_ptr->ccm[1][out_green].color[0]);
    blue_ptr   = &(lut_ptr->ccm[2][out_blue].color[0]);

    out_red    = *red_ptr++ + *green_ptr++ + *blue_ptr++;
    out_green = *red_ptr++ + *green_ptr++ + *blue_ptr++;
    out_blue   = *red_ptr + *green_ptr + *blue_ptr;

    if (parameter_ptr->have_cross term)
          {
          out_red += lut_ptr->cross terms[0][cross
            term[parameter_ptr->channel_1_term]];
          out_green += lut_ptr->cross terms[1][cross
            term[parameter_ptr->channel_2_term]];
          out_blue += lut_ptr->cross terms[2][cross
            term[parameter_ptr->channel_3_term]];
          }

    if ( out_red < 0 || out_red > 255 )
        out_red = out_red < 0 ? 0 : 255;
    if ( out_green < 0 || out_green > 255 )
        out_green = out_green < 0 ? 0 : 255;
    if ( out_blue < 0 || out_blue > 255 )
        out_blue = out_blue < 0 ? 0 : 255;

    *dst_RGB_ptr++ = (unsigned char)(lut_ptr->
      out_shapers[0][out_red]);
    *dst_RGB_ptr++ = (unsigned char)(lut_ptr->
      out_shapers[1][out_green]);
    *dst_RGB_ptr++ = (unsigned char)(lut_ptr->
      out_shapers[2][out_blue]);
      }
```

Other ways of implementing the present invention than as shown in the above source code are of course possible.

The many features and advantages of the invention are apparent from the detailed specification and thus it is intended by the appended claims to cover all such features and advantages of the invention which fall within the true spirit and scope of the invention. Further, since numerous modifications and changes will readily occur to those skilled in the art, it is not desired to limit the invention to the exact construction and operation illustrated and described, and accordingly all suitable modifications and equivalents may be resorted to, falling within the scope of the invention.

It should be noted that the objects and advantages of the invention may be attained by means of any compatible combination(s) particularly pointed out in the items of the following summary of the invention and the appended claims.

The invention may be summarized as follows:

1. A method of performing a multivariable transform having transform segments with corresponding single variables, comprising:

(a) performing a table look-up for each of the segments using the corresponding single variables as indices and producing corresponding segment outputs; and

(b) combining the segment outputs to produce a transform output.

2. A method wherein said combining operation sums the segment outputs.

3. A method wherein step (a) uses single dimensional tables.

4. A method of performing a multivariable transform having transform segments with corresponding single variables and segments with multivariable cross terms, comprising:

(a) performing a table look-up for the segments having the corresponding single variables using the corresponding single variables as indices and producing single variable outputs;

(b) performing a table look-up for the segments with the multivariable cross terms using the multivariable cross terms as indices and producing cross term outputs; and

(c) combining the single variable and cross term outputs.

5. A method wherein step (b) comprises:

(bi) combining the multivariable cross terms to produce a single cross term variable; and

(bii) performing a table look-up using the single cross term variable to produce the cross term output.

6. A method wherein step (bi) comprises summing the multivariable cross terms.

7. A method wherein step (bi) further comprises shift dividing the summed multivariable cross terms.

8. A method wherein steps (a) and (b) use single dimensional tables.

9. A method of performing a multivariable color transform having transform segments with corresponding single variables and segments with multivariable cross terms, comprising the steps of:

(a) obtaining color values to be transformed; and

(b) transforming the color values into transformed color values, comprising the steps of:

(1) performing table look-ups for the segments having the corresponding single variables using a single dimensional table and the corresponding single variables as indices to produce single variable intermediate values;

(2) adding the cross term variables to produce combined variables;

(3) performing table look-ups for the segments having the multivariable cross terms using a single dimensional table and the combined variables as indices to produce cross term intermediate values; and

(4) summing the single variable and cross term intermediate values to produce the transformed color values.

10. A method of encoding a multivariable transform with a single variable segments and a multivariable cross term segment, comprising:

(a) identifying an equation that includes the cross term and having secondary single variable terms not included in the transform;

(b) combining the single variable segments with the equation to produce a modified transform;

(c) compensating the single variable segments to remove the effect of the secondary single variable terms;

(d) producing table entries for the single variable segments and loading a first table for each single variable segment;

(e) producing table entries for the equation and loading a second table for the cross term segment; and

(f) providing a combining operation to combine outputs of said first and second tables.

11. A method wherein said first and second tables are single dimensional tables.

12. A method wherein an index into the second table is produced by summing the cross term variables.

13. An apparatus for performing a multivariable transform, comprising:

input means for providing values to be transformed; and

a computer for performing the transformation, said computer comprising:

single variable one-dimensional tables producing single variable outputs for single variable segments of the transform using corresponding single variables;

variable means for combining cross term variables for cross term segments of the transform to produce combined cross term variables;

cross term one-dimensional tables producing cross term outputs for cross term segments of the transform using the combined cross term variables; and

combining means for combining the single variable and cross term outputs to produce transformed outputs.

14. An apparatus for performing a multivariable transform, comprising:

input means for providing values to be transformed; and

a computer for performing the transform, said computer comprising:

one dimensional tables producing intermediate values for single variable segments of the transform and multivariable cross term segments of the transform;

variable combining means for combining cross term variables to produce a cross term table index; and

intermediate combination means for combining the intermediate values to produce transformed outputs.

## Claims

1. A method of performing a multivariable transform having transform segments with corresponding single variables, comprising:

(a) performing a table look-up for each of the segments using the corresponding single variables as indices and producing corresponding segment outputs; and

(b) combining the segment outputs to produce a transform output.

2. A method as recited in claim 1, wherein said combining operation sums the segment outputs.

3. A method as recited in claim 2, wherein step (a) uses single dimensional tables.

4. A method of performing a multivariable transform having transform segments with corresponding single variables and segments with multivariable cross terms, comprising:

(a) performing a table look-up for the segments having the corresponding single variables using the corresponding single variables as indices and producing single variable outputs;

(b) performing a table look-up for the segments with the multivariable cross terms using the multivariable cross terms as indices and producing cross term outputs; and

(c) combining the single variable and cross term outputs.

5. A method as recited in claim 4, wherein step (b) comprises:

(bi) combining the multivariable cross terms to produce a single cross term variable; and

(bii) performing a table look-up using the single cross term variable to produce the cross term output,

wherein preferably step (bi) comprises summing the multivariable cross terms,

wherein preferably step (bi) further comprises shift dividing the summed multivariable cross terms, and

wherein preferably steps (a) and (b) use single dimensional tables.

6. A method of performing a multivariable color transform having transform segments with corresponding single variables and segments with multivariable cross terms, comprising the steps of:

(a) obtaining color values to be transformed; and

(b) transforming the color values into transformed color values, comprising the steps of:

(1) performing table look-ups for the segments having the corresponding single variables using a single dimensional table and the corresponding single variables as indices to produce single variable intermediate values;

(2) adding the cross term variables to produce combined variables;

9

EP 0 591 931 A1

(3) performing table look-ups for the segments having the multivariable cross terms using a single dimensional table and the combined variables as indices to produce cross term intermediate values; and

(4) summing the single variable and cross term intermediate values to produce the transformed color values.

7. A method of encoding a multivariable transform with a single variable segments and a multivariable cross term segment, comprising:

(a) identifying an equation that includes the cross term and having secondary single variable terms not included in the transform;

(b) combining the single variable segments with the equation to produce a modified transform;

(c) compensating the single variable segments to remove the effect of the secondary single variable terms;

(d) producing table entries for the single variable segments and loading a first table for each single variable segment;

(e) producing table entries for the equation and loading a second table for the cross term segment; and

(f) providing a combining operation to combine outputs of said first and second tables.

8. A method as recited in claim 7, wherein said first and second tables are single dimensional tables, and wherein preferably an index into the second table is produced by summing the cross term variables.

9. An apparatus for performing a multivariable transform, comprising:

input means for providing values to be transformed; and

a computer for performing the transformation, said computer comprising:

single variable one-dimensional tables producing single variable outputs for single variable segments of the transform using corresponding single variables;

variable means for combining cross term variables for cross term segments of the transform to produce combined cross term variables;

cross term one-dimensional tables producing cross term outputs for cross term segments of the transform using the combined cross term variables; and

combining means for combining the single variable and cross term outputs to produce transformed outputs.

10. An apparatus for performing a multivariable transform, comprising:

input means for providing values to be transformed; and

a computer for performing the transform, said computer comprising:

one dimensional tables producing intermediate values for single variable segments of the transform and multivariable cross term segments of the transform;

variable combining means for combining cross term variables to produce a cross term table index; and

intermediate combination means for combining the intermediate values to produce transformed outputs.

10

INPUT DEVICE ~14

10

COMPUTER ~12

OUTPUT DEVICE ~16

# FIG. 1

20

$r^1 = c_0 + c_1r + c_2r^2 + c_3r^3$

r →

21

g →

$g^1 = c_4g + c_5g^2 + c_6g^3$

⊕ ~24 → R

22

b →

$b^1 = c_7b + c_8b^2 + c_9b^3$

# FIG. 2

FIG. 3

EP 0 591 931 A1

FIG. 4

USING RI
LOOK-UP
RI'
— 70

USING GI
LOOK-UP
GI'
— 72

USING BI
LOOK-UP
BI'
— 74

USING RI'
LOOK-UP
R1, R2 & R3
— 76

USING GI'
LOOK-UP
G1, G2 & G3
— 78

USING BI'
LOOK-UP
B1, B2 & B3
— 80

82

$RS = R1 + G1 + B1$
$GS = R2 + G2 + B2$
$BS = R3 + G3 + B3$

84

USING RS
LOOK-UP
RO

86

USING GS
LOOK-UP
GO

88

USING BS
LOOK-UP
BO

FIG. 5

14

FIG. 6

FIG. 7

EP 0 591 931 A1

160

r →

164

g →

162

166

FIG. 8

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | US-A-5 075 767 (TAKARAGI)<br>* column 1, line 35 - line 57 *<br>* column 2, line 24 - line 60 *<br>* column 7, line 6 - column 8, line 51 *<br>* abstract; figures *<br>--- | 1-10 | H04N1/46<br>G06F15/68 |
| A | EP-A-0 272 655 (DAINIPPON SCREEN MFG)<br>* page 2, line 46 - page 4, line 3 *<br>--- | 1-10 | |
| A | EP-A-0 084 228 (XEROX CORP)<br>* page 6, line 25 - page 7, line 27 *<br>* abstract; figure 3 *<br>----- | 1-10 | |
| | | | **TECHNICAL FIELDS SEARCHED** (Int.Cl.5)<br><br>H04N<br>G06F |

The present search report has been drawn up for all claims

| Place of search | Date of completion of the search | Examiner |
|---|---|---|
| THE HAGUE | 11 January 1994 | Isa, S |